# EUROPEAN PATENT APPLICATION

(11) **EP 4 614 799 A1**
(43) Date of publication of application: **10.09.2025**
(21) Application number: 24161945.1
(22) Date of filing: 07.03.2024
(51) Int. Cl.: H02P 5/00

(54) **FUNCTIONAL SAFETY SUPERVISION OF ELECTRIC POWER SYSTEM**

(71) Applicant: ABB SCHWEIZ AG, 5400 Baden (CH)
(72) Inventor: Järvinen, Pekka, 11341 Stockholm (SE); Kangas, Ilpo, 00380 Helsinki (FI); Kotiranta, Aleksi, 00380 Helsinki (FI)
(74) Representative: Kolster Oy Ab

(57) **Abstract**

Method for functional safety supervision of an electric power system comprising a control unit (10) and a plurality of devices (21, 22, 23, 24) connected to the control unit (10), the method comprising configuring the plurality of devices (21, 22, 23, 24) into two or more functional safety supervision groups, and transmitting data from one or more of the plurality of devices (21, 22, 23, 24) to the control unit (10) using black channel communication, wherein the transmitting comprises providing in the transmitting device the data to be transmitted with an indicator indicating the functional safety supervision group into which the transmitting device in question is configured.

## Description

### TECHNICAL FIELD

The present invention relates to functional safety supervision of an electric power system, and more particularly to functional safety supervision of an electric power system comprising a control unit and a plurality of devices connected to the control unit.

### BACKGROUND

An inverter is an example of an electric power converter device. Another example of an electric power converter device is a rectifier. Inverters and rectifiers and/or other such power converter devices may be used e.g. in connection with electric motor drives for controlling motors. Such electric motor drives may also be configured to operate both in motoring and generating modes, for instance.

In connection with electric motor drives, for example, various safety functions may be applied with the purpose of monitoring and ensuring the safety of such drives in different situations and conditions of use. Certain safety regulations and standards govern e.g. the electric motor drives in various applications. An example of such a standard is IEC 61800-5-2 which defines e.g. Safe Torque Off (STO) function. STO function brings the motor of the electric drive to a no-torque state each time the function is activated.

Such functional safety supervision may be implemented by means of a control unit connected to a power unit, such as an electric power converter device, or a power stage thereof, for example. The connection for communication between the control unit and the power unit may include a so-called black channel. The black channel generally refers to communication in which regardless of the communications protocol used in normal communication, for example, the safety critical communication may be encoded in a specific way as defined in standard IEC 61508, for instance. An example of such an implementation is disclosed in document EP 2930844 B1.

A problem related to the above solution is that in a system comprising several power units, and possibly other devices, for which functional safety supervision needs to be implemented, at least some of the power units may need to be supervised separately from each other and, as a consequence, several control units may be needed in the system.

### BRIEF DESCRIPTION

An object of the present invention is thus to provide a method and an apparatus for implementing the method so as to overcome the above problem or at least to alleviate the above problem. The objects of the invention are achieved by a method and an electric power unit which are characterized by what is stated in the independent claims. The preferred embodiments of the invention are disclosed in the dependent claims.

The invention is based on the idea of configuring a plurality of devices into two or more functional safety supervision groups and transmitting data from the devices to the control unit using black channel communication such that the data is provided with an indicator indicating the functional safety supervision group into which the transmitting device in question is configured.

An advantage of the solution of the invention is that a control unit can recognize the functional safety supervision group of the device indicated by the indicator provided with the transmitted data and hence multiple devices belonging to different safety supervision groups can be supervised with a single control unit.

### BRIEF DESCRIPTION OF THE DRAWINGS

In the following the invention will be described in greater detail by means of preferred embodiments with reference to the accompanying drawings, in which
Figure 1 illustrates an example of a system according to an embodiment;
Figure 2 illustrates an example of a system according to an embodiment;
Figure 3 illustrates an example of a system according to an embodiment; and
Figure 4 illustrates an example of a data packet according to an embodiment.

### DETAILED DESCRIPTION

The following embodiments are exemplary. Although the description may refer to "an", "one", or "some" embodiment(s) in several locations, this does not necessarily mean that each such reference is to the same embodiment(s), or that the feature only applies to a single embodiment, for example. Single features of different embodiments may also be combined to provide other embodiments. Generally, all terms and expressions used should be interpreted broadly and they are intended to illustrate, not to restrict, the embodiments. The figures only show components necessary for understanding the various embodiments. The number and/or configuration of the various elements, and generally their implementation, could vary from the examples shown in the figures. The application of the various embodiments described herein is not limited to any specific system, but they can be used in connection with various electric systems. Moreover, the use of the various embodiments described herein is not limited to systems employing any specific fundamental frequency or any specific voltage level, for example.

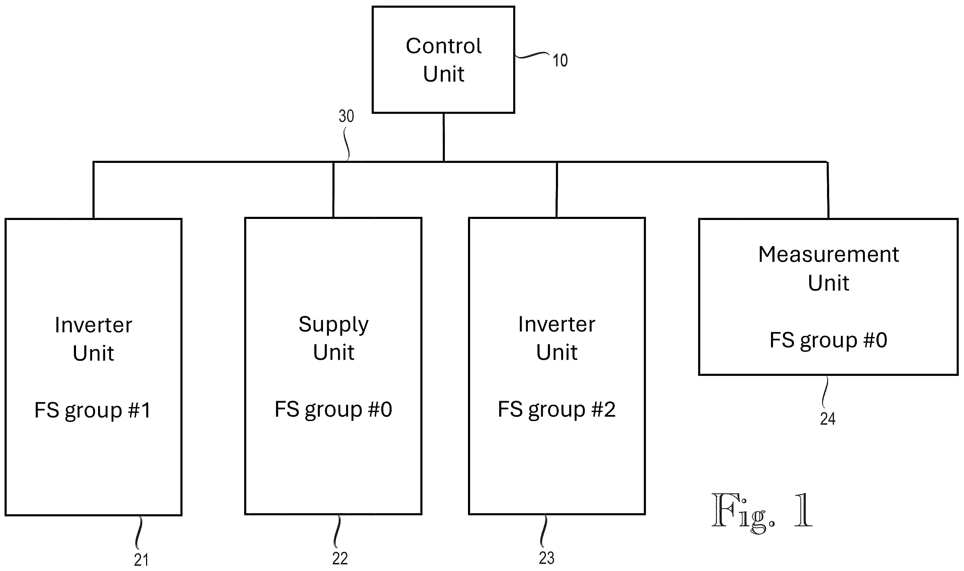

Figure 1 is a simplified block diagram of an exemplary system showing some equipment (e.g. apparatuses, devices, units) and functional entities, whose implementation and/or number and/or configuration may differ from what is shown in the example of Figure 1. The connections shown in Figure 1 are logical connections and corresponding actual physical connections, which may comprise wired and/or wireless connections, could be different. Such a system may also comprise other equipment, functional entities and/or structures, some of which may be used in or for data management and communication in the system or in any part of the system, for example. Also e.g. any communication protocols used may vary and may depend on the system characteristics, for instance.

Figure 1 shows an example of an electric power system which comprises a control unit (device, arrangement) 10 and a plurality of devices 21, 22, 23, 24 connected to the control unit 10. According to an embodiment, the plurality of devices 21, 22, 23, 24 may comprise at least one power unit controlled by the control unit and/or at least one auxiliary device, such as a measurement device or a switch device, for instance. In the simplified example of Figure 1 devices 21 and 23 are inverter units, device 22 is a supply unit, such as a rectifier, and device 24 is a measurement unit, such as a measurement card. Herein term inverter generally refers to an electronic device or circuitry, for example, that is able to convert direct current to alternating current, and term rectifier generally refers to an electronic device or circuitry, for example, that is able to convert alternating current to direct current. The system of Figure 1 may be an electric drive and the inverter units 21, 23 may be configured to control respective motors (not shown in the figure), for example, and the supply unit 22 may be configured to be connected to an electric network (grid), such as an AC network, and to supply electric energy to the system from the electric network (not shown in the figure) and/or from the system to the electric network. Within this disclosure term power unit is generally used to refer to a power converter, such as an inverter or a rectifier or a combination thereof. In case of a power converter device comprising multiple power stages (modules), e.g. multiple inverters within a single physical inverter device, term power unit is generally used to refer to a single such power stage. The implementation of such power units may vary but generally the power unit comprises controllable semiconductor switches, such as IGBTs, which are controlled according to control information sent by the control unit. Such a power converter or a power unit may have one or more phases, e.g. three phases.

The control unit 10 is configured to implement control of functional safety supervision of the system. Generally, such functional safety supervision may include e.g. implementing one or more safety functions in a manner known per se and/or monitoring status of such one or more safety functions implemented in the system, for example. Moreover, such monitoring may include monitoring one or more predetermined parameters and/or characteristics of the system related to such safety functions, for instance. The devices 21, 22, 23, 24 in the system being supervised by the control unit 10 are similarly configured to implement the one or more safety functions in a manner known per se. Such safety functions may be based on standard IEC 61508 and/or IEC 61800, for example. However, the implementation of the safety functionality, i.e. one or more safety functions, according to the present disclosure is not limited to these standards. One example of such a safety function is the Safe Torque Off (STO) function defined in IEC standard for functional safety of drives, IEC 61800-5-2. The implementation of the STO function may involve transmitting STO commands from the control unit 10 to the device being supervised and diagnostics information (data) from the device to the control unit 10. Such diagnostics information (data) from the device to the control unit may need to be transmitted using a safe (e.g. safety certified) transmission. Another exemplary safety function is a safe speed supervision safety function. It is used in several safety functions according to IEC 61800-5-2, such as Safely-Limited Speed (SLS) function, for example. As an example, an electric drive comprising one or more power units and a control unit can provide the compliant safe speed information (data) to a safety logic unit which monitors that a motor speed is within a allowed range. Such speed information from the power unit(s) to the control unit 10 may need to be transmitted using a safe transmission. Thus, e.g. the STO and such safe speed related safety functions, for example, may require a method for safely transmitting at least some data from the devices, such as power unit(s), to the control unit. Moreover, it may be necessary for the control unit to be able to safely identify the device(s). This is especially relevant if the device(s) that one control unit is controlling, belong to e.g. different functional groups, which may mean that they belong to different safety monitoring groups, for example.

The control unit 10 may also generally control the normal operation of the devices 21, 22, 23, 24 and the system, which may include e.g. sending control information to one or more of the plurality of devices 21, 22, 23, 24 and/or receiving various operational data, such as measurement data, from one or more of the plurality of devices 21, 22, 23, 24. The control information may comprise e.g. reference values for current to be outputted from the inverter unit or torque to be produced by an electrical motor connected to the inverter, for example. The control unit 10 may further process various calculations relating to the control, such as different calculations relating to control of the motor(s) in the system.

The communication connection 30 between the control unit 10 and the devices 21, 22, 23, 24 may be implemented as a wired and/or wireless connection and any suitable communication protocol(s) may be used for the normal communication between the control unit 10 and the devices 21, 22, 23, 24. Such communication protocol(s) may depend on the system in question. At least some or all functional safety-related data may be communicated between the control unit 10 and the plurality of the devices 21, 22, 23, 24 using black channel communication. The black channel communication generally refers to using a so-called black channel (black communications channel), known as such, for safely transmitting at least e.g. safety critical data (information) between two safety related parties regardless of the communications protocol possibly used in normal communication relating to the normal operation of the system. The use of black channel involves encrypting (securely encoding) the transmitted data in the sending end and decrypting it in the receiving end in safety approved blocks whereby the data can be transmitted over a normal, e.g. a non-safety approved, communication connection, which may include e.g. an industrial data network(s), while retaining the safety integrity of the data. The black channel approach in the communication may be implemented by using a higher-level safety protocol (e.g. an application protocol) on top of the protocol used for the normal (non-safety related) communication. The black channel safety protocol may depend on the protocol used for the normal communication. An example of such a safety protocol is PROFIsafe which may be used on PROFINET (or PROFIBUS) network. Such a safety protocol may encapsulate the data prior to transmission and decapsulate the data on the receiving end. Such safety protocols may deal with e.g. different types of communication errors, such as data corruption, transmission delays and losses, examples of which are described in standard IEC 61784-3. The black channel concept is also referred to e.g. in standard IEC 61508-2. Moreover, document EP 2930844 B1 discloses examples of utilizing the black channel communication.

According to an embodiment, the plurality of the devices 21, 22, 23, 24 are configured into two or more functional safety supervision groups and data is transmitted from one or more of the plurality of devices 21, 22, 23, 24 to the control unit 10 using the black channel communication such that the transmitting comprises providing in the transmitting device the data to be transmitted with an indicator indicating the functional safety supervision group into which the transmitting device in question is configured. In other words, the devices 21, 22, 23, 24 in the system connected to and under the control unit 10 are each assigned to a functional safety supervision group which group is then indicated in the data transmitted from the device 21, 22, 23, 24 to the control unit 10 using the black channel between the device and the control unit. According to an embodiment, the configuring into the two or more functional safety supervision groups of the plurality of the devices 21, 22, 23, 24 may be performed by means of at least one safety-related switch, e.g. a safety-certified switch, in each such device to be configured. According to an embodiment, the data transmitted using the black channel communication may comprise at least functional safety-related data. According to an embodiment, the data transmitted using the black channel communication may comprise only functional safety-related data. As an example, such functional safety-related data may comprise data relating to Safe Torque Off (STO) safety function and/or to Safely-Limited Speed (SLS) safety function or to any such safety function. For example, the functional safety-related data may comprise e.g. diagnostics data and/or speed data transmitted from one or more of the plurality of devices 21, 22, 23, 24 to the control unit 10 using the black channel communication. According to an embodiment, the data transmitted from one or more of the plurality of devices 21, 22, 23, 24 is received in the control unit 10 and the functional safety supervision group indicated by the indicator provided with the received data is recognized in the control unit 10. According to an embodiment, the received data may be processed in the control unit 10 according to the recognized functional safety supervision group. As an example, the control unit 10 may use the received data for implementing the functional safety supervision of the particular functional safety supervision group indicated by the indicator provided with the received data. The use of functional safety supervision groups assigned to the devices 21, 22, 23, 24 connected to the control unit 10 allow the safety functions implemented in the control unit 10 to safely classify the data coming from the connected devices. As the supervision group information is transmitted through the black channel, the supervision group information can be trusted.

The safety supervision groups may be predetermined and represented e.g. with numbers, letters, any combinations thereof, or any other suitable indicators. As an example, a safety supervision group may comprise only one device or more than one device. According to an embodiment, the two or more functional safety supervision groups may comprise at least one group for which functional safety supervision is disabled. Generally, the safety supervision groups may be determined system configuration specifically on the basis of how the devices in the system in question need to be supervised from the functional safety perspective. Thus, the term safety supervision group may relate to one device or a group of devices which can be supervised as a single group by the control unit. In the example of Figure 1, the first inverter unit 21 is assigned to functional safety supervision group #1, and the second inverter unit 23 is assigned to functional safety supervision group #2. Moreover, both the supply unit 22 as well as the measurement unit 24 are assigned to functional safety supervision group #0, which may represent a group for which functional safety supervision is disabled. Thus the present disclosure generally provides a solution for separating devices, such as power units and measurement devices, to different functional safety supervision groups, and moreover enables also to exclude one or more of such devices from the functional safety supervision.

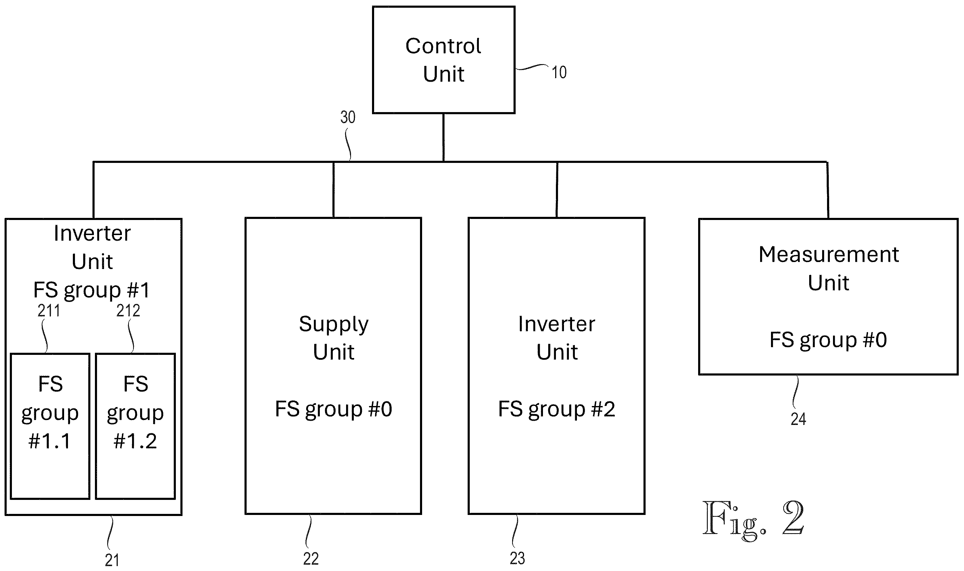

According to an embodiment, the two or more functional safety supervision groups comprise one or more main groups and one or more subgroups of the one or more main groups. Such subgroups may be implemented on one or more hierarchic levels, for example. The use of such subgroups is exemplified with Figure 2 which shows another example of an electric power system. The system of Figure 2 corresponds to that of Figure 1 except that in the system of Figure 2 the first inverter unit 21 comprises two inverter stages 211 and 212, which have been assigned to safety supervision groups #1.1 and #1.2 respectively. Thus, safety supervision groups #1.1 and #1.2 represent subgroups of main group #1.

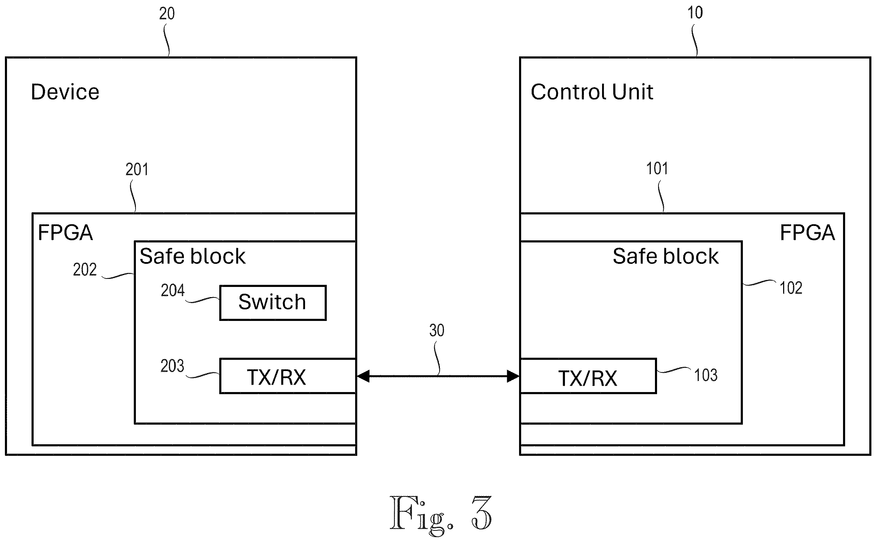

Figure 3 an example of a system according to an embodiment. Figure 3 is an example of the implementation of the control unit 10 and a device 20 connected thereto. For the sake of simplicity, Figure 3 only shows one device 20. However, any of the devices 21, 22, 23, 24 in the examples of Figures 1 and 2 could be implemented as the device 20 in the example of Figure 3. According to an embodiment, the device 20, such as a power unit, comprises functional safety means (arrangement, unit, device) configured to implement one or more safety functions. In the example of Figure 3, such functional safety means are implemented by means of a safe block 202 of a field-programmable gate array (FPGA) 201. Safety-approved FPGAs can be programmed using safety approved tools and measures, including e.g. safety-approved software for implementing safety-related functions and operations. A safety device utilizing such FPGA(s) can obtain a safety-approval and the safe block 202 in the FPGA can be frozen once approved such that the non-safe portion of the FPGA 201 can be programmed without requiring getting a re-approval for the safe side, for instance. In the example of Figure 3, the safe block 202 of the FPGA 201 comprises a transmitter/receiver (TX/RX) 203, which may be configured to perform the communication towards the control unit 10 using the black channel communication. In a corresponding way, the control unit 10 comprises functional safety means (arrangement, unit, device) configured to implement one or more safety functions. In the example of Figure 3, such functional safety means are also implemented by means of a safe block 102 of a field-programmable gate array (FPGA) 101. In the example of Figure 3, the safe block 102 of the FPGA 101 comprises a transmitter/receiver (TX/RX) 103, which may be configured to perform the communication towards the device(s) 20 using the black channel communication. The black channel communication of the functional safety-related data between the device(s) 20 and the control unit 10 may then be implemented by encrypting such data in the transmitter/receiver 103, 203 of the safety approved block 102, 202 of the FPGA 101, 201 of the sending party, sending the encrypted data via the standard communications channel 30, and then decrypting the received data in the transmitter/receiver 103, 203 of the safety approved block 102, 202 of the FPGA 101, 201 of the receiving party. It should be noted that the FPGA circuits in the above examples are presented merely as possible examples for implementing the safety approved blocks. However, any other suitable circuits or circuit structures could also be used instead or in addition to such FPGA circuits for implementing the functional safety means in the device(s) 20 or in the control unit 10.

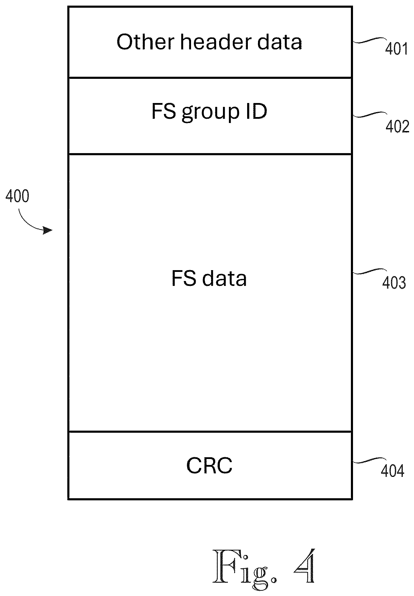

According to an embodiment, the providing of the data to be transmitted with the indicator indicating the functional safety supervision group into which the transmitting device in question is configured comprises encoding the indicator in a data packet comprising the data to be transmitted. Figure 4 discloses an example of a data packet 400 according to an embodiment. According to the example illustrated, the indicator, FS group ID, indicating the functional safety supervision group of the transmitting device can embedded in a header 402, e.g. after other header data 401, of the data packet 400 containing functional safety-related data 403, FS data. Moreover, the data packet may be provided with a cyclic redundancy check (CRC) value 404, which is calculated over the entire data packet 400, for example. This can be used for ensuring that no content of the data packet 400 has changed during the transmission thereof. It should be noted, however, that the indicator may be attached to the data sent to the control unit 10 from a connected device 20, 21, 22, 23, 24 also in another way depending on e.g. the characteristics of the system in question and/or on the communication protocol(s) used on the data link 30, for instance. According to an embodiment, the exemplary data packet structure disclosed e.g. in Figure 4, or generally any corresponding data packet structure which comprises the indicator indicating the functional safety supervision group, may be used as an additional layer in the communication such that the data packet 400 is encapsulated within one or more data packets of an underlying black channel safety protocol, for example. According to another embodiment, it is possible to configure the used black channel safety protocol data packet structure such that it comprises the indicator indicating the functional safety supervision group in a predetermined portion of the header of the safety protocol data packet, e.g. essentially as exemplified in Figure 4, or in another suitable predetermined portion of the safety protocol data packet, for instance.

According to an embodiment, the device 20, 21, 22, 23, 24 comprises switching means 204 for configuring the functional safety supervision group of the device. According to an embodiment, the communication means 203 of the device 20, 21, 22, 23, 24, which are configured to communicate data to the control unit 10 using the black channel communication, are then configured to provide the data to be transmitted with an indicator indicating the functional safety supervision group of the power unit configured by such switching means 204. Such switching means 204 enabling the configuration of the functional safety supervision group of the device may comprise at least one safety-related switch (selector) for configuring the functional safety supervision group of the device. According to an embodiment, the at least one safety-related switch may be a safety-certified switch. According to an embodiment, the at least one safety-related switch may comprise a mechanical and/or electrical switch. Term safety-related herein generally refers to compliance with requirements of one or more relevant safety standard(s) or regulation(s) applied or required which may be system and/or application specific. As an example, such a standard may be IEC 61508 and/or IEC 62061 and/or another such standard or regulation, for example. Term safety-certified herein generally refers to meeting in a certified manner any such relevant safety standard(s) or regulation(s) required or applied, for instance. Possible examples of such a switch include e.g. one or more of the following: a set of lock protected DIP-switches under a cover, a rotary switch operable with a key or protected with a lockable cover, a digital, password protected, human-machine interface. It should be noted, however, that such switching means 204, which allow e.g. the user or operator of the system to configure (assign) the functional safety supervision group of the device 20, 21, 22, 23, 24, may be implemented in various ways. The use of such device-specific switching means 204 for configuring the functional safety supervision group of the device 20, 21, 22, 23, 24 provides the advantage that to it is possible to change the configuration of the devices 20, 21, 22, 23, 24 connected to the single control unit 10 in an easy way e.g. during commissioning and/or possible reconfiguration of the system even in field conditions. Moreover, the user experience can be improved through such automatic identification of the safety topology in the system. In addition, using such safety-related, or safety-certified, switching means 204 can assure that the functional safety supervision group indication configured by the switching means 204, and provided from the device 20, 21, 22, 23, 24 to the control unit 10, also complies with the relevant safety standard(s) or regulation(s) required or applied in the system.

As an example, if one control unit has software running for both grid side and motor side control of an inverter device, then in order to handle safety functions for the motor side, the control unit should be able to detect safely which power stages (power units) belong to the motor side and which power stages (power units) belong to the grid side. With the embodiments disclosed herein the control unit can safely detect, based on the functional safety supervision group being non-zero and the same number, that such power stages (power units) are to be monitored as a single inverter. Thus, an existing safety logic can be used without the user or operator having to separately insert the safety configuration to the control unit, for example.

As another example, if one control unit is controlling an inverter device consisting of multiple power stages (power units) classified in one functional safety supervision group, and independent functional safety supervision subgroups, it is possible to safely deduce the number of such power stages to be monitored without specifically entering the exact number of active power stages, for instance. This may be important for reduced run functionality: if the electric drive originally had e.g. 6 power stages (in supervision group 1, and subgroups 1 through 6), the drive can calculate safely the number of power stages from the safely encoded functional safety supervision group data received from the power stages. In the case of a reduced run, one or more of the power stages is removed and with the embodiments disclosed herein the control unit can now safely detect, based on the functional safety supervision group being e.g. non-zero and the same number, that these remaining power stages are to be monitored as a single inverter. Thus, also in this example an existing safety logic can be used without the user having to separately insert safety configuration to the controller even in such a reduced run operation.

Any means within the control unit and/or the devices connected to the control unit for implementing at least part of the functionality according to any one of the embodiments herein, or any combination of the embodiments, may be implemented as one physical unit or as two or more separate physical units that are configured to implement the functionality. Herein the term 'unit' generally refers to a physical or logical entity, such as a physical device or a part thereof or a software routine. The means for implementing at least part of the functionality according to any one of the embodiments herein may be implemented at least partly by means of one or more computers or corresponding digital signal processing (DSP) equipment provided with suitable software, for example. Such a computer or digital signal processing equipment preferably comprises at least a working memory (RAM) providing storage area for arithmetical operations, and a central processing unit (CPU), such as a general-purpose digital signal processor. The CPU may comprise a set of registers, an arithmetic logic unit, and a control unit. The CPU control unit is controlled by a sequence of program instructions transferred to the CPU from the RAM. The CPU control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the various embodiments, or a part thereof, may further comprise suitable input means for receiving e.g. measurement and/or control data, and output means for outputting e.g. control or any other data, such as the determined thermal load. It is also possible to use a specific integrated circuit or circuits, such as application-specific integrated circuits (ASIC), digital signal processing devices (DSPD), programmable logic devices (PLD), field-programmable gate arrays (FPGA) and/or discrete electric components and devices for implementing at least part of the functionality according to any one of the embodiments. Any such computer and/or other apparatus, and/or software, implementing the various embodiments, or a part thereof, is/are preferably implemented in compliance with any relevant requirements of safety standard(s) and/or regulation(s) required or applied in the system. Any such computer or other apparatus, and/or software, implementing the various embodiments, or a part thereof, may be safety-certified as possibly required by such relevant requirements of safety standard(s) and/or regulation(s) required or applied in the system, for example.

Many electric devices, such as components of electric power systems, e.g. electric drives and components thereof, may comprise processors and memory that may be utilized in implementing the functionality according to the various embodiments described herein. Thus, at least some modifications and configurations possibly required for implementing an embodiment could be performed as software routines, which may be implemented as added or updated software routines. If at least part of the functionality of any of the embodiments is implemented by software, such software may be provided as a computer program product comprising computer program code which, when run on a computer, causes the computer or corresponding arrangement to perform the functionality according to the embodiments as described herein. Such a computer program code may be stored or generally embodied on a computer readable medium, such as suitable memory, e.g. a flash memory or an optical memory, from which it is loadable to the unit or units executing the program code. In addition, such a computer program code implementing any of the embodiments may be loaded to the unit or units executing the computer program code via a suitable data network, for example, and it may replace or update a possibly existing program code. An embodiment may provide a computer program embodied on any client-readable distribution/data storage medium or memory unit(s) or article(s) of manufacture, comprising program instructions executable by one or more processors/computers, which instructions, when loaded into an apparatus, constitute the monitoring arrangement, or any corresponding unit or an entity providing corresponding functionality, or at least part of the corresponding functionality. Programs, also called program products, including software routines, program snippets constituting "program libraries", applets and macros, can be stored in any medium and may be downloaded into an apparatus. In other words, each or some or one of the possible units/sub-units and/or algorithms for one or more functions/operations described above, for example by means of any of Figures 1 to 4 and any combination thereof, may be an element that comprises one or more arithmetic logic units, a number of special registers and control circuits.

It will be obvious to a person skilled in the art that, as the technology advances, the inventive concept can be implemented in various ways. The invention and its embodiments are not limited to the examples described above but may vary within the scope of the claims.

## Claims

1. A method for functional safety supervision of an electric power system comprising a control unit and a plurality of devices connected to the control unit, the method comprising:
configuring the plurality of devices into two or more functional safety supervision groups; and
transmitting data from one or more of the plurality of devices to the control unit using black channel communication, wherein the transmitting comprises providing in the transmitting device the data to be transmitted with an indicator indicating the functional safety supervision group into which the transmitting device in question is configured.

2. A method as claimed in claim 1, the method further comprising:
receiving in the control unit the data transmitted from one or more of the plurality of devices; and
recognizing in the control unit the functional safety supervision group indicated by the indicator provided with the received data.

3. A method as claimed in claim 2, the method further comprising:
processing in the control unit the received data according to the recognized functional safety supervision group.

4. A method as claimed in any one of claims 1 to 3, wherein providing the data to be transmitted with the indicator comprises encoding the indicator in a data packet comprising the data to be transmitted.

5. A method as claimed in any one of claims 1 to 4, wherein the two or more functional safety supervision groups comprise one or more main groups and one or more subgroups of the one or more main groups.

6. A method as claimed in any one of claims 1 to 5, wherein the two or more functional safety supervision groups comprise at least one group for which functional safety supervision is disabled.

7. A method as claimed in any one of claims 1 to 6, wherein the plurality of devices comprises at least one power unit controlled by the control unit and/or at least one auxiliary device.

8. A method as claimed in claim 7, wherein the at least one power unit comprises at least one power unit configured to be connected to an electric motor and/or at least one power unit configured to be connected to an electric network, wherein the power unit comprises an inverter or a power stage of an inverter device.

9. A method as claimed in any one of claims 1 to 8, wherein the transmitted data is functional safety-related data.

10. A method as claimed in claim 9, wherein the functional safety-related data relates to Safe Torque Off (STO) safety function and/or to Safely-Limited Speed (SLS) safety function.

11. An electric power unit, the power unit comprising:
functional safety means configured to implement one or more safety functions;
switching means for configuring a functional safety supervision group of the power unit; and
communication means configured to transmit data to a control unit controlling the power unit via a communication channel using black channel communication, wherein the communication means are configured to provide the data to be transmitted with an indicator indicating the functional safety supervision group of the power unit configured by the switching means.

12. An electric power unit as claimed in claim 11, wherein the switching means comprise at least one safety-related or safety-certified switch for configuring the functional safety supervision group of the power unit.

13. An electric power unit as claimed in claim 12, wherein the at least one safety-related or safety-certified switch comprises a mechanical and/or electrical switch.

14. An electric power unit as claimed in any one of claims 11 to 13, wherein the communication means are configured to provide the data to be transmitted with the indicator by encoding the indicator in a data packet comprising the data to be transmitted to the control unit.

15. An electric power unit as claimed in any one of claims 11 to 14, wherein the transmitted data is functional safety-related data relating to the one or more safety functions implemented by the functional safety means.

16. An electric power unit as claimed in claim 15, wherein the one or more safety functions implemented by the functional safety means comprise at least Safe Torque Off (STO) safety function and/or Safely-Limited Speed (SLS) safety function.

17. An electric power unit as claimed in any one of claims 11 to 16, wherein the power unit is configured to be connected to an electric motor and/or configured to be connected to an electric network, and wherein the power unit comprises an inverter or a power stage of an inverter device.

18. An electric power system comprising at least two electric power units as claimed in any one of claims 11 to 17 and a control unit configured to control the at least two electric power units.

19. An electric power system as claimed in claim 18, wherein the control unit comprises:
communication means configured to receive the data transmitted from the at least two electric power units via the communication channel using the black channel communication; and
processing means configured to recognize the functional safety supervision group indicated by the indicator provided with the received data.

20. An electric power system as claimed in claim 19, wherein the processing means are further configured to process the received data according to the recognized functional safety supervision group.
